# EUROPÄISCHE PATENTSCHRIFT

(11) **EP 2 699 465 B1**
(45) Veröffentlichungstag und Bekanntmachung des Hinweises auf die Patenterteilung: **27.05.2015**
(21) Anmeldenummer: 12714285.9
(22) Anmeldetag: 03.04.2012
(51) Int. Cl.: B61L 19/06, B61L 27/00

(54) **VERFAHREN ZUM AUSTAUSCHEN EINES AN EIN ELEKTRONISCHES STELLWERK ANGESCHLOSSENEN STELLWERKS MIT RELAISSCHNITTSTELLEN-EIN-/AUSGANG GEGEN EIN WEITERES ELEKTRONISCHES STELLWERK MIT MINDESTENS EINEM DATENBUS-EIN-/AUSGANG SOWIE EIN SOLCHES ELEKTRONISCHES STELLWERK**
METHOD FOR EXCHANGING AN INTERLOCKING WITH A RELAY INTERFACE CONNECTED TO AN ELECTRONIC INTERLOCKING AGAINST ANOTHER ELECTRONIC INTERLOCKING WITH AT LEAST ONE DATABUS INTERFACE AS WELL AS SUCH AN ELECTRONIC INTERLOCKING
PROCÉDÉ POUR ÉCHANGER UN POSTE D'AIGUILLAGE AVEC UNE INTERFACE À RELAIS CONNECTÉ À UN POSTE D'AIGUILLAGE ÉLECTRONIQUE CONTRE UN AUTRE POSTE D'AIGULLAGE ÉLECTRONIQUE AVEC AU MOINS UNE INTERFACE POUR UN BUS DE DONNÉES AINSI QU'UN TEL POSTE D'AIGUILLAGE ÉLECTRONIQUE

(30) Priorität: 18.04.2011 DE 102011007601
(43) Veröffentlichungstag der Anmeldung: 26.02.2014
(73) Patentinhaber: Siemens Aktiengesellschaft, 80333 München (DE)
(72) Erfinder: VIERLING, Thomas, 38104 Braunschweig (DE)
(86) Internationale Anmeldenummer: PCT/EP2012/056089
(87) Internationale Veröffentlichungsnummer: WO 2012/143239

(56) Entgegenhaltungen:
- EP-A1- 0 787 639
- WO-A1-2005/113315
- WO-A1-2010/148528
- DE-U1-202005 016 151
- AUST F ET AL: "TEST- UND SIMULATIONSSOFTWARE FUER ESTW", SIGNAL + DRAHT, TELZLAFF VERLAG GMBH. DARMSTADT, DE, Bd. 99, Nr. 12, 1. Dezember 2007 (2007-12-01), Seiten 13-16, XP001508256, ISSN: 0037-4997
- BAUHOF H: "Automasiertes testen in der signaltechnik", SIGNAL + DRAHT, TELZLAFF VERLAG GMBH. DARMSTADT, DE, Bd. 102, Nr. 1-2, 1. Januar 2010 (2010-01-01), Seiten 6-11, XP001550947, ISSN: 0037-4997

## Beschreibung

Es liegt im Trend der technischen Entwicklung, dass zur Abwicklung des Schienenverkehrs zunehmend Stellwerke älterer Bauart in Relaisausführung durch elektronische Stellwerke ersetzt werden. Die elektronischen Stellwerke sind mit einem Datenbus-Ein-/Ausgang versehen, damit sie mit gleichartigen Stellwerken kommunizieren können. Die elektronischen Stellwerke sind darüber hinaus auch mit einem Relaisschnittstellen-Ein-/Ausgang ausgerüstet, um ihren Einsatz auch in Verbindung mit einem älteren Stellwerk in Relaisausführung zu ermöglichen; dies erfordert für die beiden unterschiedlichen Ein-/Ausgänge jeweils eine spezielle Software.

Ist ein Stellwerk in Relaistechnik mit einem elektronischen Stellwerk verbunden und soll es gegen ein elektronisches Stellwerk ausgetauscht werden, dann erfordert dies während der Inbetriebnahme des neuen elektronischen Stellwerks besondere Maßnahmen, weil die Inbetriebnahme des neuen elektronischen Stellwerks nicht schlagartig durchgeführt werden kann, vielmehr in einem längeren komplizierten Prozess bei laufendem Betrieb die notwendigen umfangreichen Tests vorgenommen werden müssen. Dabei ist es immer wieder erforderlich, das Stellwerk in Relaisausführung abzuschalten und das neue elektronische Stellwerk anzuschalten und umgekehrt. Dies erfordert ein Deaktivieren der Software des Relaisschnittstellen-Ein-/Ausgangs und ein Aktivieren der Software des Datenbus-Ein-/Ausgangs des einen elektronischen Stellwerks und umgekehrt, also ein "Hoch- und Runterfahren" des Stellwerk-Programms.

Der Erfindung liegt die Aufgabe zugrunde, hier Erleichterungen zu schaffen und ein Verfahren zum Austauschen eines an ein elektronisches Stellwerk angeschlossenen Stellwerks mit Relaisschnittstellen-Ein-/Ausgang gegen ein weiteres elektronisches Stellwerk mit mindestens einem Datenbus-Ein-/Ausgang vorzuschlagen, mit dem der Austausch zeitsparend vorgenommen werden.

In der WO 2005/113315 A1 wird ein Verfahren beschrieben, bei dem beide Stellwerke parallel betrieben werden und die Verantwortung erst dann übergeben wird, wenn die Tests beendet sind.

Zur Lösung dieser Aufgabe dient erfindungsgemäß ein Verfahren zum Austauschen eines an ein elektronisches Stellwerk mit einem Relaisschnittstellen-Ein-/Ausgang und einem Datenbus-Ein-/Ausgang angeschlossenen Stellwerks mit Relaisschnittstelle gegen ein weiteres elektronisches Stellwerk mit mindestens einem Datenbus-Ein-/Ausgang, bei dem als das eine elektronische Stellwerk ein elektronisches Stellwerk mit einer derartigen generischen Funktionalität für seine Ein-/Ausgänge verwendet wird, dass beim Herstellen einer Datenbusverbindung zwischen dem Datenbus-Ein-/Ausgang des weiteren elektronischen Stellwerks und dem Datenbus-Ein-/Ausgang des einen elektronischen Stellwerks der Datenbus-Ein-/Ausgang dieses einen elektronischen Stellwerks aktiviert und sein Relaisschnittstellen-Ein-/Ausgang deaktiviert wird und beim Unterbrechen der Datenbusverbindung der Datenbus-Ein-/Ausgang des einen elektronischen Stellwerks deaktiviert und sein Relaisschnittstellen-Ein-/Ausgang aktiviert wird. Ein wesentlicher Vorteil des erfindungsgemäßen Verfahrens besteht darin, dass durch das eine elektronische Stellwerk mit generischer Funktionalität für seine Ein-/Ausgänge allein durch das Herstellen der Datenverbindung zu dem neuen elektronischen Stellwerk über den Datenbus-Ein-/Ausgang der Relaisschnittstellen-Ein-/Ausgang dieses einen elektronischen Stellwerks deaktivierbar bzw. durch Auflösen der Datenverbindung der Relaisschnittstellen-Ein-/Ausgang wieder aktivierbar ist.

Der Erfindung liegt ferner die Aufgabe zugrunde, ein elektronisches Stellwerk vorzuschlagen, dass einen zeitsparenden Austausch eine angeschlossenen Stellwerks in Relaistechnik gegen ein weiteres elektronisches Stellwerk ermöglicht.

Zur Lösung dieser Aufgabe ist erfindungsgemäß ein elektronisches Stellwerk mit einem Relaisschnittstellen-Ein-/Ausgang und einem Datenbus-Ein-/Ausgang mit einer derartigen generischen Funktionalität für seine Ein-/Ausgänge versehen, dass beim Herstellen einer Datenbusverbindung zwischen dem Datenbus-Ein-/Ausgang eines weiteren elektronischen Stellwerks und seinem Datenbus-Ein-/Ausgang sein Datenbus-Ein-/Ausgang aktiviert und sein Relaisschnittstellen-Ein-/Ausgang deaktiviert wird und beim Unterbrechen der Datenbusverbindung sein Datenbus-Ein-/Ausgang deaktiviert und sein Relaisschnittstellen-Ein-/Ausgang aktiviert wird.

Hinsichtlich der erreichbaren Vorteile wird auf die obigen Ausführen zum erfindungsgemäßen Verfahren verwiesen.

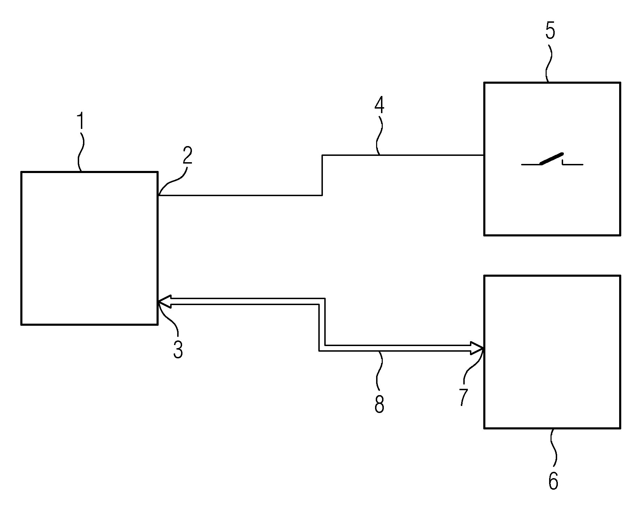

Zur weiteren Erläuterung der Erfindung ist in der Figur eine Anordnung mit mehreren schematisch dargestellten Stellwerken gezeigt, die zur Erläuterung des erfindungsgemäßen Verfahrens geeignet ist.

In der Figur ist ein elektronisches Stellwerk 1 gezeigt, das einen Relaisschnittstellen-Ein/Ausgang 2 und einen Datenbus-Ein-/Ausgang 3 aufweist. Das elektronische Stellwerk 1 ist über eine Kommunikationsverbindung 4 mit einem Stellwerk 5 in Relaistechnik verbunden.

Die Figur zeigt ferner ein weiteres elektronisches Stellwerk 6, das mit einem Datenbus-Ein-/Ausgang 7 versehen ist. Dieses weitere elektronische Stellwerk 6 soll gegen das Stellwerk 5 in Relaistechnik ausgetauscht werden, so dass anstelle des Stellwerks in Relaistechnik letztendlich nur noch das weitere elektronische Stellwerk 6 mit dem einen elektronischen Stellwerk 1 über einen Datenbus 8 verbunden ist.

Um dahin zu gelangen, ist das eine elektronische Stellwerk 1 mit einer generischen Funktionalität für seine Ein-/Ausgänge 2 und 3 so ausgestattet, dass beim Verbinden des Datenbusses 8 mit dem Datenbus-Ein-/Ausgang 3 selbsttätig der Relaisschnittstellen-Ein-/Ausgang 2 des elektronischen Stellwerk deaktiviert und der Datenbus-Ein-/Ausgang aktiviert wird. In Eisenbahnverkehr-Betriebspausen können dann über den Datenbus 8 jeweils Tests mit dem weiteren elektronischen Stellwerk 6 durchgeführt werden. Bei Beendigung der jeweiligen Betriebspause kann dann durch Lösen des Datenbusses 8 von dem Datenbus-Ein-/Ausgang 3 dieser Ein-/Ausgang deaktiviert und selbsttätig der Relaisschnittstellen-Ein-/Ausgang 2 aktiviert werden.

## Patentansprüche

1. Verfahren zum Austauschen eines an ein elektronisches Stellwerk (1) mit einem Relaisschnittstellen-Ein-/Ausgang (2) und einem Datenbus-Ein-/Ausgang (3) angeschlossenen Stellwerks (5) mit Relaisschnittstellen-Ein-/Ausgang gegen ein weiteres elektronisches Stellwerk (6) mit mindestens einem Datenbus-Ein-/Ausgang (7), bei dem
als das eine elektronische Stellwerk ein elektronisches Stellwerk (1) mit einer derartigen generischen Funktionalität für seine Ein-/Ausgänge(2,3)verwendet wird, dass beim Herstellen einer Datenbusverbindung zwischen dem Datenbus-Ein-/Ausgang (7) des weiteren elektronischen Stellwerks (6) und dem Datenbus-Ein-/Ausgang (3) des einen elektronischen Stellwerks (1) der Datenbus-Ein-/Ausgang (3) dieses einen elektronischen Stellwerks (1) aktiviert und sein Relaisschnittstellen-Ein-/Ausgang (2) deaktiviert wird und beim Unterbrechen der Datenbusverbindung der Datenbus-Ein-/Ausgang (3) des einen elektronischen Stellwerks(1) deaktiviert und sein Relaisschnittstellen-Ein-/Ausgang (2) aktiviert wird.

2. Elektronisches Stellwerk (1) mit einem Relaisschnittstellen-Ein-/Ausgang (2) und einem Datenbus-Ein-/Ausgang (3) mit einer derartigen generischen Funktionalität für seine Ein-/Ausgänge (2,3), dass beim Herstellen einer Datenbusverbindung zwischen dem Datenbus-Ein-/Ausgang (7) eines weiteren elektronischen Stellwerks (6) und einem Datenbus-Ein-/Ausgang (3) des einen elektronischen Stellwerks (1) sein Datenbus-Ein-/Ausgang (3) aktiviert und sein Relaisschnittstellen-Ein-/Ausgang (2) deaktiviert wird und beim Unterbrechen der Datenbusverbindung der Datenbus-Ein-/Ausgang (3) des einen elektronischen Stellwerks (1) deaktiviert und sein Relaisschnittstellen-Ein-/Ausgang (2) aktiviert wird.

## Claims

1. Method for replacing a signal box (5), connected to an electronic signal box (1) with a relay interface input/output (2) and a databus input/output (3) having relay interface input/output with a further electronic signal box (6) with at least one databus input/output (7), in which
an electronic signal box (1) with a generic functionality of this type is used as the one electronic signal box for its inputs/outputs (2, 3) such that when a databus connection is established between the databus input/output (7) of the further electronic signal box (6) and the databus input/output (3) of the one electronic signal box (1), the databus input/output (3) of this one electronic signal box (1) is activated and its relay interface input/output (2) is deactivated and when the databus connection is interrupted, the databus input/output (3) of the one electronic signal bus (1) is deactivated and its relay interface input/output (2) is activated.

2. Electronic signal box (1) with a relay interface input/output (2) and a databus input/output (3) with a generic functionality of this type for its inputs/outputs (2, 3) such that when a databus connection is established between the databus input/output (7) of a further electronic signal box (6) and a databus input/output (3) of the one electronic signal box (1), its databus input/output (3) is activated and its relay interface input/output (2) is deactivated and when the databus connection is interrupted, the databus input/output (3) of the one electronic signal box (1) is deactivated and its relay interface input/output (2) is activated.

## Revendications

1. Procédé de remplacement d'un poste ( 5 ) d'aiguillage, ayant une entrée/sortie d'interface de relais et raccordé à un poste ( 1 ) d'aiguillage électronique ayant une entrée/sortie ( 2 ) d'interface de relais et une entrée/sortie ( 3 ) de bus de données, par un autre poste ( 6 ) d'aiguillage électronique ayant au moins une entrée/sortie ( 7 ) de bus de données, dans lequel
on utilise, comme poste d'aiguillage électronique, un poste ( 1 ) d'aiguillage électronique ayant une fonctionnalité générique telle pour ses entrées/sorties ( 2, 3 ) que, lorsqu'une liaison de bus de données est ménagée entre l'entrée/sortie ( 7 ) de bus de données de l'autre poste ( 6 ) d'aiguillage électronique et l'entrée/sortie ( 3 ) du poste ( 1 ) d'aiguillage électronique, l'entrée/sortie ( 3 ) de bus de données de ce poste ( 1 ) d'aiguillage électronique soit activée et que son entrée/sortie ( 2 ) d'interface de relais soit désactivée et, lorsque la liaison de bus de données est interrompue, l'entrée/sortie ( 3 ) de bus de données du poste ( 1 ) d'aiguillage électronique soit désactivée et son entrée/sortie ( 2 ) d'interface de relais soit activée.

2. Poste ( 1 ) d'aiguillage électronique ayant une entrée/sortie ( 2 ) d'interface de relais et une entrée/sortie ( 3 ) de bus de données ayant une fonctionnalité générique telle, pour ses entrées/sorties ( 2, 3 ), que, lorsqu'une liaison de bus de données est ménagée entre l'entrée/sortie ( 7 ) de bus de données d'un autre poste ( 6 ) d'aiguillage électronique et une entrée/sortie ( 3 ) de bus de données du poste ( 1 ) d'aiguillage électronique, son entrée/sortie ( 3 ) de bus de données soit activée et son entrée/sortie ( 2 ) d'interface de relais soit désactivée et, lorsque la liaison de bus de données est interrompue, l'entrée/sortie ( 3 ) de bus de données du poste ( 1 ) d'aiguillage électronique soit désactivée et son entrée/sortie d'interface de relais soit activée.
